# EUROPEAN PATENT APPLICATION

(11) **EP 2 166 385 A2**
(43) Date of publication of application: **24.03.2010**
(21) Application number: 09460042.6
(22) Date of filing: 10.09.2009
(51) Int. Cl.: G02B 6/02

(54) **Microstructure optical fiber and method for making same**

(30) Priority: 19.09.2008 PL 38611408
(71) Applicant: Telekomunikacja Polska S.A., 00-105 Warszawa (PL)
(72) Inventor: Piramidowicz, Ryszard, 01-496 Warszawa (PL); Gdula, Pawel, 01-840 Warszawa (PL)
(74) Representative: Piotrowicz, Alicja

(57) **Abstract**

The optical fiber structure of the internal core comprises one or several elementary cells made of germanium dioxide-doped glass with air openings regularly distributed around the internal core. The structure of the external core, in a form of an equilateral polygon situated around the air openings surrounding the internal core consists of inclusions of boron trioxide or fluorine-doped quartz glass of low refractive index. The external core is surrounded by air openings which are regularly distributed and surrounded by quartz glass covered with hardened protective coatings. The steps of thermal calibration of tubes, formation of rods and doping are performed using the MCVD method.

## Description

This invention relates to a microstructure optical fiber compensating for chromatic dispersion in a predefined range of the electromagnetic radiation frequency and a method for manufacturing the microstructure optical fiber.

An optical fiber with a dual concentric core, known from the paper G.P. Agrawal: Fiber-Optic Communication Systems, 2-nd edn, New York, Wiley, (1997), is composed from two concentric, radially located core regions, namely, an internal core with a circular cross-section and an external core in the form of a ring. Each of these two cores has a different refractive index, whereas the refractive index for the external coating is selected accordingly.

The paper Dispersion compensating fibres, Opt.Fiber Technol., vol. 6, No 2, pp. 164-180 (2000) by L. Gruner-Nielsen, S.N. Kudsen, B. Edvold, T. Veng, D. Magnussen, C.C. Larsen, and H. Damsgaard, describes optical fibers having a dual concentric core (DCCF) in which the effect of a strong negative chromatic dispersion is employed for compensating for chromatic dispersion.

The paper Design of dispersion-compensating fibers based on a dual-concentric-core photonic crystal fiber, Optics. Letters Vol. 29 No. 23, December 2004, by F. Gerome, J.-L. Auguste, and J.-M. Blondy, describes a DCCF type microstructure optical fiber for compensating for chromatic dispersion, having a central defect constituting the internal core surrounded by regularly placed air openings. The external core is defined by a ring of elementary cells with openings of smaller diameters than the diameters of the openings surrounding the internal core. Air openings with bigger diameters are regularly placed around the external core.

US 4188089 B1, cols. 3 and 4, describes a technological process for manufacturing optical fibers in which germanium dioxide and boron trioxide are used.

According to the invention, a microstructure optical fiber has an internal core composed of germanium dioxide-doped quartz glass, having a diameter, the numerical values of which range from 1 to 15 microns. Openings having diameters from 0.25 to 0.65 of the lattice constant are regularly situated around the internal core. These openings are surrounded by an external core having the cross-section in the form of an equilateral polygon. Furthermore, the diameter of the circle inscribed into the external core is from 3 to 7 times bigger than the diameter of the internal core. The thickness of the external core is from 0.8 to 2 of the lattice constant. The external core is made of quartz glass with periodical boron dioxide-doped inclusions, having diameters of numeral values ranging between 0.1 and 0.9 of the lattice constant. The external core is surrounded by air openings, the diameters of which have numerical values ranging from 0.3 to 0.95 of the lattice constant. The air openings are distributed regularly and are surrounded by quartz glass. The external diameter of so defined microstructure optical fiber is equal to the diameter of standard optical fibers. Moreover, the quartz glass material is covered with protective coatings.

Preferably, the cross-section of the external core is an equilateral hexagon.

Preferably, the protective coatings are hardened.

According to the invention, in one variation of the microstructure optical fiber the internal core is made of germanium dioxide-doped quartz glass, having the diameter, the numerical values of which range from 1 to 15 microns. Openings having diameters from 0.25 to 0.65 of the lattice constant are regularly situated around the internal core. These openings are surrounded by an external core having the cross-section in the form of an equilateral polygon. Furthermore, the diameter of the circle inscribed into the external core is from 3 to 7 times bigger than the diameter of the internal core. The thickness of the external core is from 0.8 to 2 of the lattice constant. The external core is made of quartz glass with periodical fluorine-doped inclusions, with diameters between 0.1 and 0.9 of the lattice constant. The external core is surrounded by air openings, the diameters of which have numerical values ranging from 0.3 to 0.95 of the lattice constant. The air openings are distributed regularly and are surrounded by quartz glass. The external diameter of so defined microstructure optical fiber is equal to the diameter of standard optical fibers. Moreover, the quartz glass material is covered with protective coatings.

Preferably, the cross-section of the external core is an equilateral hexagon.

Preferably, the protective coatings are hardened.

According to the invention, in a second variation of the microstructure optical fiber the internal core is made of germanium dioxide-doped quartz glass, having a diameter, the numerical values of which range from 1 to 15 microns. Openings having diameters from 0.25 to 0.65 of the lattice constant are regularly situated around the internal core. These openings are surrounded by an external core having the cross-section in the form of an equilateral polygon. Furthermore, the diameter of the circle inscribed into the external core is from 3 to 7 times bigger than the diameter of the internal core. The thickness of the external core is from 0.8 to 2 of the lattice constant. The external core is made of quartz glass with boron trioxide and fluorine-doped periodical inclusions with diameters between 0.1 and 0.9 of the lattice constant. The external core is surrounded by air openings, the diameters of which have numerical values ranging from 0.3 to 0.95 of the lattice constant. The air openings are distributed regularly and are surrounded by quartz glass. The external diameter of so defined microstructure optical fiber is equal to the diameter of standard optical fibers. Moreover, the quartz glass material is covered with protective coatings.

Preferably, the cross-section of the external core is an equilateral hexagon.

Preferably, the protective coatings are hardened.

According to the invention, in a method for manufacturing microstructure optical fiber quartz glass tubes are calibrated to a preset wall thickness. Then germanium dioxide-doped optical fiber preforms as well as boron trioxide-doped optical fiber preforms are produced. In an optical fiber drawing machine capillary tubes and thin rods are drawn from the calibrated tubes and rods and from the produced optical fiber preforms. These capillary tubes and thin rods are stacked within a tube made of quartz glass, in a chamber in which high purity conditions are maintained. Next, an a heat-soaking step is performed in the temperature range of 400 - 800°C in an atmosphere of chlorinating agents and oxygen. Then, the components of the final structure are joined in an optical fiber preform machining tool by initial fusing, and an optical fiber pra-preform I is obtained. The components of the structure are precisely fused in the drawing machine by zone heating with control of the pressure, thus obtaining mutual connection of the elements. After thermal thinning of the obtained optical fiber pra-preform I, this thinning step being performed in the drawing machine, an optical fiber pra-preform II is obtained. Then, the optical fiber pra-preform II is fused into a tube made of quartz glass and, simultaneously, a correction of the numerical value of the lattice constant and the openings diameters is performed. In the drawing machine the optical fiber is drawn and has applied protective coatings, which are hardened.

According to the invention, in a variation of the method for manufacturing microstructure optical fiber, quartz glass tubes are calibrated to a preset wall thickness. Then, germanium dioxide-doped and fluorine-doped optical fiber preforms are produced. In an optical fiber drawing machine capillary tubes and thin rods are drawn from the calibrated tubes and rods and from the produced optical fiber preforms. These capillary tubes and thin rods are stacked within a tube made of quartz glass, in a chamber in which high purity conditions are maintained. Next, a heat-soaking step is performed in the temperature range of 400 - 800°C in an atmosphere of chlorinating agents and oxygen. Then, the components of the final structure are joined in an optical fiber preform machining tool by initial fusing, and an optical fiber pra-preform I is obtained. The components of the structure are precisely fused in the drawing machine by zone heating with control of the pressure, thus obtaining mutual connection of the elements. After a thermal thinning of the obtained optical fiber pra-preform I, this thinning step being performed in the drawing machine, an optical fiber pra-preform II is obtained. Then, the optical fiber pra-preform II is fused into a tube made of quartz glass and, simultaneously, a correction of the numerical value of the lattice constant and the openings diameters is performed. In the drawing machine the optical fiber is drawn and has applied protective coatings, which are hardened.

According to the invention, in another variation of the method for manufacturing microstructure optical fiber, quartz glass tubes are calibrated to a preset wall thickness. Then, germanium dioxide-doped a fluorine and boron trioxide-doped optical fiber preforms are produced. In an optical fiber drawing machine capillary tubes and thin rods are drawn from the calibrated tubes and rods and from the produced optical fiber preforms. These capillary tubes and thin rods are stacked within a tube made of quartz glass, in a chamber in which high purity conditions are maintained. Next, a heat-soaking step is performed in the temperature range of 400 - 800°C in an atmosphere of chlorinating agents and oxygen. Then, the components of the final structure are joined in an optical fiber preform machining tool by initial fusing, and an optical fiber pra-preform I is obtained. The components of the structure are precisely fused in the drawing machine by zone heating with control of the pressure, thus obtaining mutual connection of the elements. After thermal thinning of the obtained optical fiber pra-preform I, this thinning step being performed in the optical fiber drawing machine, an optical fiber pra-preform II is obtained. Then, the optical fiber pra-preform II is fused into a tube made of quartz glass and, simultaneously, a correction of the numerical value of the lattice constant and the openings diameters is performed. In the drawing machine the optical fiber is drawn and has applied protective coatings, which are hardened.

The main advantageous effects resulting from using the microstructure optical fiber according to the invention, relative to the state of the art, include obtaining a stable, controlled dispersion curve and a possibility of designing thereof according to specific applications as well as ensuring full technological control over small variations of the lattice constants and filling factors in the design of the DCCF fibers.

The method of manufacturing the microstructure optical fiber according to the invention gives possibilities to precisely control the germanium dioxide doping level in the one-mode core of the DCCF optical fiber as well as the doping boron trioxide and fluorine level in the many-mode external ring-shaped core of the DCCF fiber. Moreover, the method of manufacturing the microstructure optical fiber according to the invention gives possibilities to precisely manipulate the refractive index of the germanium dioxide doped internal core and boron trioxide and/or fluorine doped external core, preserving the required technical precision of maintaining the desired diameters of the openings which separate the one-mode internal core from the many-mode external core as well as the diameters of the openings surrounding the external core.

An example embodiment of the microstructure optical fiber according to the invention is shown in the drawings, in which:

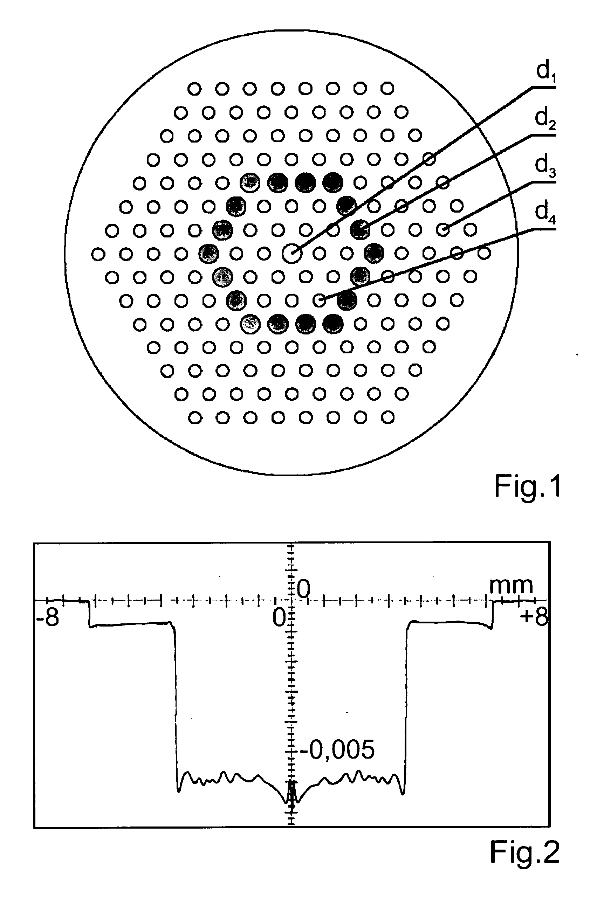

Fig. 1 shows a cross-section view of the microstructure optical fiber, and
Fig. 2 shows a profile of the refractive index of a boron trioxide-doped preform.

In the example embodiment of the microstructure optical fiber according to the invention the internal core of a diameter d₁, the numerical values of which range from 1 to 15 microns, is composed of germanium dioxide-doped quartz glass. Around the internal core there are situated regularly distributed openings having diameters d₄ equal to 0.25 - 0.65 of the lattice constant. These openings are surrounded by the external core the cross-section of which is in a form of an equilateral hexagon.

Moreover, the diameter of the circle inscribed into the external core is from 3 to 7 times bigger than the diameter of the internal core. The thickness of the external core is from 0.8 to 2 of the lattice constant, moreover the external core is made of quartz glass boron trioxide-doped with periodical inclusions, having diameters d₂ os values between 0.1 and 0.9 of the lattice constant.

The external core is surrounded by air openings, the diameters d₃ of which have numerical values ranging from 0.3 to 0.95 of the lattice constant. The air openings are distributed regularly and are surrounded by quartz glass.

The external diameter of so defined microstructure optical fiber is equal to the diameter of standard optical fibers. Moreover, the quartz glass material is covered with protective coatings, which are hardened.

In a particular embodiment the external core is made of quartz glass with fluorine-doped periodical inclusions or of quartz glass with boron trioxide and fluorine-doped periodical inclusions.

In a particular embodiment the photonic coating of the optical fiber is separated from the external portion of the fiber made of quartz glass containing no openings by a single layer of bigger openings.

In the most preferable example embodiment of the microstructure optical fiber according to the invention the internal core is made of germanium dioxide-doped quartz glass, with a diameter d₁ equal to 2.4 microns. Openings with diameters d₄ equal to 1.6 micron are regularly distributed around the internal core. These openings are surrounded by the external core, the cross-section of which is an equilateral hexagon.

Moreover, the diameter of the circle inscribed into the external core is equal to 14 microns. The thickness of the external core is 5 microns, and the external core is made of quartz glass with boron trioxide-doped periodical inclusions having diameters d₂ equal to 2.4 microns.

Air openings having diameters d₃ equal to diameters d₄ are located around the external core. The air openings are distributed regularly and are surrounded by quartz glass.

In an example realization of the method of manufacturing the microstructure optical fiber according to the invention quartz glass tubes are calibrated to a preset wall thickness. Then, germanium dioxide-doped optical fiber preforms are produced, as well as boron trioxide-doped optical fiber preforms are produced.

In an optical fiber drawing machine capillary tubes and thin rods are drawn from the calibrated tubes and rods and from the produced optical fiber preforms. These capillary tubes and thin rods are stacked within a tube made of quartz glass, in a chamber in which high purity conditions are maintained. Next, a heat-soaking step is performed in the temperature range of 400 - 800°C in an atmosphere of chlorinating agents and oxygen. Then, the components of the final structure are joined in an optical fiber preform machining tool by initial fusing, and an optical fiber pra-preform I is obtained.

The components of the structure are precisely fused in the drawing machine by zone heating with control of the pressure, thus obtaining mutual connection of the elements. After thermal thinning of the obtained optical fiber pra-preform I, this thinning step being performed in the drawing machine, an optical fiber pra-preform II is obtained. Then, the optical fiber pra-preform II is fused into a tube made of quartz glass and, simultaneously, a correction of the numerical value of the lattice constant and the openings diameters is performed. In the drawing machine the optical fiber is drawn and has applied protective coatings, which are hardened.

In a variation of the method according to the invention the produced optical fiber preforms are germanium dioxide-doped and fluorine-doped.

In another variation of the method according to the invention the produced optical fiber preforms are germanium dioxide-doped and fluorine and boron trioxide-doped.

## Claims

1. A microstructure optical fiber with an integrated structure surrounded by protective coatings, **characterized in that** an internal core of a diameter (d₁), which assumes numerical values in the range of 1 - 15 microns, is composed of germanium dioxide-doped quartz glass, openings with diameters (d₄) ranging from 0.25 to 0.65 of the lattice constant are regularly distributed around the internal core, these openings being surrounded by an external core having a cross-section in a form of an equilateral polygon, and moreover the diameter of the circle inscribed into the external core is from 3 to 7 times bigger than the diameter of the internal core, the thickness of the external core is from 0.8 to 2 of the lattice constant, the external core is made of quartz glass with boron trioxide-doped periodical inclusions with diameters (d₂) ranging from 0.1 to 0.9 of the lattice constant, air openings being situated around the external core, the diameters (d₃) of which have numerical values ranging from 0.3 to 0.95 of the lattice constant, these openings being regularly distributed and surrounded by quartz glass, the external diameter of so defined microstructure optical fiber is equal to the diameter of standard optical fibers, and the quartz glass material is covered with protective coatings.

2. An optical fiber according to Claim 1 **characterized in that** the cross-section of the external core is a hexagon.

3. An optical fiber according to Claim 1 **characterized in that** the protective coatings are hardened.

4. A microstructure optical fiber with an integrated structure surrounded by protective coatings, **characterized in that** an internal core of a diameter (d₁), which assumes numerical values in the range of 1 - 15 microns, is composed of germanium dioxide-doped quartz glass, openings with diameters (d₄) ranging from 0.25 to 0.65 of the lattice constant are regularly distributed around the internal core, these openings being surrounded by an external core having a cross-section in the form of an equilateral polygon, and moreover the diameter of the circle inscribed into the external core is from 3 to 7 times bigger than the diameter of the internal core, the thickness of the external core is from 0.8 to 2 of the lattice constant, the external core is made of quartz glass with periodical fluorine-doped inclusions with diameters (d₂) ranging from 0.1 to 0.9 of the lattice constant, air openings being situated around the external core, the diameters (d₃) of which have numerical values ranging from 0.3 to 0.95 of the lattice constant, these openings being regularly distributed and surrounded by quartz glass, the external diameter of so defined microstructure optical fiber being equal to the diameter of standard optical fibers, and the quartz glass material being covered with protective coatings.

5. An optical fiber according to Claim 4 **characterized in that** the cross-section of the external core is a hexagon.

6. An optical fiber according to Claim 4 **characterized in that** the protective coatings are hardened.

7. A microstructure optical fiber with an integrated structure surrounded by protective coatings, **characterized in that** an internal core of a diameter (d₁), which assumes numerical values in the range of 1 - 15 microns, is composed of germanium dioxide-doped quartz glass, openings with diameters (d₄) ranging from 0.25 to 0.65 of the lattice constant are regularly distributed around the internal core, these openings being surrounded by an external core having a cross-section in a form of an equilateral polygon, and moreover the diameter of the circle inscribed into the external core is from 3 to 7 times bigger than the diameter of the internal core, the thickness of the external core is from 0.8 to 2 of the lattice constant, the external core is made of quartz glass with boron trioxide-doped and fluorine-doped periodical inclusions, with diameters (d₂) ranging from 0.1 to 0.9 of the lattice constant, air openings being situated around the external core, the diameters (d₃) of which have numerical values ranging from 0.3 to 0.95 of the lattice constant, these openings being regularly distributed and surrounded by quartz glass, the external diameter of so defined microstructure optical fiber being equal to the diameter of standard optical fibers, and the quartz glass material being covered with protective coatings.

8. An optical fiber according to Claim 7 **characterized in that** the cross-section of the external core is a hexagon.

9. An optical fiber according to Claim 7 **characterized in that** the protective coatings are hardened.

10. A method for producing microstructure optical fiber with an integrated structure surrounded by protective coatings, **characterized in that** quartz glass tubes are calibrated to a preset wall thickness, then germanium dioxide-doped optical fiber preforms as well as preforms boron trioxide-doped optical fiber are produced, in an optical fiber drawing machine capillary tubes and thin rods are drawn from the calibrated tubes and rods and from the produced optical fiber preforms, these capillary tubes and thin rods are stacked within a tube made of quartz glass, in a chamber in which high purity conditions are maintained, next a heat-soaking step is performed in the temperature range of 400 - 800°C in an atmosphere of chlorinating agents and oxygen afterwards the components of the final structure are joined in an optical fiber preform machining tool by initial fusing, and an optical fiber pra-preform I is obtained, whereas the components of the structure are precisely fused in the drawing machine by zone heating with control of the pressure, thus obtaining mutual connection of the elements, and after a thermal thinning of the obtained optical fiber pra-preform I, this thinning step being performed in the drawing machine, an optical fiber pra-preform II is obtained, then the optical fiber pra-preform II is fused into a tube made of quartz glass and, simultaneously, a correction of the numerical value of the lattice constant and the openings diameters is performed, in the drawing machine the optical fiber is drawn and has applied protective coatings, which are hardened.

11. A method for producing microstructure optical fiber with an integrated structure surrounded by protective coatings, **characterized in that** quartz glass tubes are calibrated to a preset wall thickness, then germanium dioxide-doped optical fiber preforms as well as optical fiber fluorine-doped preforms are produced, in an optical fiber drawing machine capillary tubes and thin rods are drawn from the calibrated tubes and rods and from the produced optical fiber preforms, these capillary tubes and thin rods are stacked within a tube made of quartz glass, in a chamber in which high purity conditions are maintained, next a heat-soaking step is performed in the temperature range of 400 - 800°C in an atmosphere of chlorinating agents and oxygen afterwards the components of the final structure are joined in an optical fiber preform machining tool by initial fusing, and an optical fiber pra-preform I is obtained, whereas the components of the structure are precisely fused in the drawing machine by zone heating with control of the pressure, thus obtaining mutual connection of the elements, and after a thermal thinning of the obtained optical fiber pra-preform I, this thinning step being performed in the drawing machine, an optical fiber pra-preform II is obtained, then the optical fiber pra-preform II is fused into a tube made of quartz glass and, simultaneously, a correction of the numerical value of the lattice constant and the openings diameters is performed, in the drawing machine the optical fiber is drawn and has applied protective coatings, which are hardened.

12. A method for producing microstructure optical fiber with an integrated structure surrounded by protective coatings, **characterized in that** quartz glass tubes are calibrated to a preset wall thickness, then germanium dioxide-doped optical fiber preforms as well as fluorine and boron trioxide-doped optical fiber preforms are produced, in an optical fiber drawing machine capillary tubes and thin rods are drawn from the calibrated tubes and rods and from the produced optical fiber preforms, these capillary tubes and thin rods are stacked within a tube made of quartz glass, in a chamber, in which high purity conditions are maintained, next a heat-soaking step is performed in the temperature range of 400 - 800°C in an atmosphere of chlorinating agents and oxygen afterwards the components of the final structure are joined in an optical fiber preform machining tool by initial fusing, and an optical fiber pra-preform I is obtained, whereas the components of the structure are precisely fused in the drawing machine by zone heating with control of the pressure, thus obtaining mutual connection of the elements, and after thermal thinning of the obtained optical fiber pra-preform I, this thinning step being performed in the optical fiber drawing machine, an optical fiber pra-preform II is obtained, afterwards the optical fiber pra-preform II is fused into a tube made of quartz glass and, simultaneously, a correction of the numerical value of the lattice constant and the openings diameters is performed, in the drawing machine the optical fiber is drawn and has applied protective coatings, which are hardened.
